# FASCICULE DE BREVET EUROPEEN

(11) **EP 2 497 690 B1**
(45) Date de publication et mention de la délivrance du brevet: **11.09.2013**
(21) Numéro de dépôt: 12158824.8
(22) Date de dépôt: 09.03.2012
(51) Int. Cl.: B60R 19/26, B60R 19/40

(54) **Absorbeur d'énergie, dispositif d'absorption d'énergie comprenant un tel absorbeur et véhicule automobile équipé d'un tel dispositif**
Energieabsorber, Vorrichtung zur Energieabsorption, die einen solchen Absorber umfasst, und mit einer solchen Vorrichtung ausgestattetes Kraftfahrzeug
Energy absorber, energy absorption device including such an absorber and automobile equipped with such a device

(30) Priorité: 10.03.2011 FR 1151985
(43) Date de publication de la demande: 12.09.2012
(73) Titulaire: Faurecia Bloc Avant, 92000 Nanterre (FR)
(72) Inventeur: Laurent, Claude, 25420 VOUJEAUCOURT (FR)
(74) Mandataire: Domenego, Bertrand

(56) Documents cités:
- FR-A1- 2 935 118
- US-A1- 2009 058 109
- US-B1- 6 338 510

## Description

La présente invention concerne un absorbeur d'énergie du type comprenant des moyens d'absorption d'énergie à rigidité en compression différenciée suivant une première direction et une deuxième direction, orientables de façon à aligner sélectivement la première direction ou la deuxième direction avec un axe de référence.

Un pare-chocs pour véhicule automobile comporte généralement un dispositif d'absorption d'énergie fixé au châssis du véhicule automobile et une peau de pare-chocs montée sur l'ossature et masquant le dispositif d'absorption d'énergie.

FR 2 895 955 A1 divulgue un dispositif d'absorption d'énergie actif comprenant une poutre transversale reliée aux longerons du châssis d'un véhicule par l'intermédiaire d'éléments déformables d'absorption d'énergie, et une structure absorbante fixée sur la poutre, la poutre étant montée pivotante autour d'un axe transversal entre une première position dans laquelle la structure absorbante a une première raideur selon la direction longitudinale du véhicule, et une deuxième position dans laquelle la structure absorbante a une deuxième raideur, plus élevée que la première, suivant la direction longitudinale du véhicule.

La poutre transversale reliant les extrémités des longerons participe à la sécurité des passagers du véhicule en cas de chocs. En effet, elle assure une certaine cohésion entre les parties droite et gauche du châssis dans tous les cas de chocs, chocs frontaux ou chocs à angle. On notera que, selon la norme actuellement en vigueur, un choc dit « réparabilité » est réalisé alors que le véhicule a une vitesse relative par rapport à un obstacle de 15 km/h et avec un angle de 10°. Ainsi, un choc « réparabilité » est un type de chocs à angle.

Or, la poutre précédente ne permet pas de satisfaire pleinement les normes sur le plan de la cohésion du véhicule. En effet, les moyens de liaison entre la poutre et les éléments déformables d'absorption d'énergie étant relativement fragiles, non seulement la capacité de pivotement de la poutre après un choc n'est pas garantie compte tenu des niveaux d'efforts qui peuvent déformés ces moyens de liaison, mais encore, lors du choc, la poutre a de grandes chances d'être arrachée et la cohésion du châssis de n'être, par conséquent, plus assurée.

Par ailleurs, ce dispositif d'absorption d'énergie connu manque de compacité, demande de l'espace libre à l'avant du véhicule et présente une masse importante, supérieure à la masse des pare-chocs passifs existants.

FR 2 935 118 A1 divulgue un dispositif d'absorption d'énergie actif comprenant une poutre transversale d'absorption des chocs de haute énergie, destinée à être solidaire des longerons du châssis, une ossature d'absorption des chocs de faible énergie fixée sur une face avant de la poutre transversale, deux absorbeurs d'énergie logés entre l'ossature et la poutre au droit de chacun des longerons du châssis, chaque absorbeur d'énergie présentant une première rigidité selon une première direction et une seconde rigidité, différente de la première rigidité, selon une seconde direction, et un moyen d'actionnement apte à orienter lesdits absorbeurs d'énergie pour aligner sélectivement la première direction ou la seconde direction avec l'axe longitudinal du véhicule automobile.

Chaque absorbeur d'énergie comprend un boîtier et un bloc en nid d'abeille reçu à l'intérieur du boîtier conférant à l'élément d'absorption d'énergie une rigidité différenciée suivant la première direction et la deuxième direction. Les moyens d'entraînement sont propre à entraîner le boîtier en rotation.

Néanmoins, un tel absorbeur d'énergie est coûteux à fabriquer et présente un résiduel incompressible important.

Un but de l'invention est de proposer un absorbeur d'énergie à rigidité différenciée de coût faible et possédant une partie incompressible réduite après choc.

A cet effet, l'invention propose un absorbeur d'énergie du type précité, **caractérisé en ce qu'**il comprend un boîtier, les moyens d'absorption d'énergie étant reçus à l'intérieur du boîtier et comprenant au moins un organe d'absorption d'énergie creux de forme tubulaire s'étendant suivant la première direction, et une cage de support du ou de chaque organe d'absorption d'énergie montée rotative dans le boîtier.

Selon des modes particuliers de réalisation, l'absorbeur d'énergie comporte une ou plusieurs des caractéristiques suivantes, prise(s) isolément ou suivant toutes les combinaisons techniquement possibles :
- la cage présente une rigidité en compression différente suivant la première direction et la deuxième direction ;
- la cage comprend sur sa surface externe au moins un jeu de nervures de renfort aligné avec la première direction, notamment deux jeux de nervures de renfort diamétralement opposés alignés suivant la première direction ;
- la cage comprend sur sa surface externe au moins une portée de guidage cylindrique pour le guidage en rotation de la cage à l'intérieur du boîtier ;
- le ou chaque élément d'absorption d'énergie comprenant des moyens d'entraînement en rotation de la cage à l'intérieur du boîtier, fixés sur le boîtier ;
- le ou chaque organe d'absorption d'énergie est de forme conique ou cylindrique ;
- le ou chaque organe d'absorption d'énergie est fermé à une extrémité.

L'invention concernent encore un dispositif d'absorption d'énergie comprenant une poutre transversale d'absorption des chocs de haute énergie, destinée à s'étendre entre les extrémité de longerons d'un châssis de véhicule automobile, une ossature d'absorption des chocs de faible énergie, fixée sur la poutre, et deux absorbeurs d'énergie tels que définis ci-dessus, logés entre l'ossature et la poutre de manière à être situés au droit des longerons.

De préférence, l'axe de référence s'étend suivant un axe longitudinal ou un axe transversal du véhicule sur lequel est monté ledit dispositif d'absorption d'énergie.

L'invention concerne encore un véhicule automobile comportant un châssis ayant deux longerons parallèles suivant un axe longitudinal, et un pare-chocs comportant un dispositif d'absorption d'énergie tel que défini ci-dessus monté sur lesdits longerons du châssis.

L'invention et ses avantages seront mieux compris à la lecture de la description qui va suivre, donnée uniquement à titre d'exemple, et faite en se référant aux dessins annexés, sur lesquels :
- la figure 1 est une vue schématique, en perspective, d'un dispositif d'absorption d'énergie conforme à l'invention disposé sur un véhicule automobile ;
- la figure 2 est une vue en perspective éclatée d'un absorbeur d'énergie selon l'invention ;
- les figures 3 à 7 sont des vues en coupe d'absorbeurs d'énergie selon des variantes de l'invention ; et
- la figure 8 est une vue similaire à celle de la figure 1, illustrant un second mode de réalisation du dispositif d'absorption d'énergie selon l'invention ;

Dans la suite de la description, les termes d'orientation tels que « longitudinal », « transversal », « horizontal », « vertical », « avant », « arrière », « gauche » et « droit » sont utilisés par référence au repère orthogonal usuel des véhicules automobiles, comprenant :
- un axe longitudinal X, horizontal et orienté de l'arrière vers l'avant ;
- un axe transversal Y, horizontal et orienté de la droite vers la gauche ; et
- un axe vertical Z, orienté du bas vers le haut.

Le véhicule 2 comprend un châssis 4 comportant deux longerons 6 et un dispositif d'absorption d'énergie 8 d'un pare-chocs avant, fixé au extrémités avant des longerons 6.

Les longerons 6 sont parallèles et s'étendent suivant l'axe longitudinal X.

Le châssis 4 comprend deux platines 10 chacun fixée à l'extrémité avant d'un longeron 6 respectif. Chaque platine 10 est disposée perpendiculairement à l'axe longitudinal X. Les platines 10 comportent des moyens de fixation aptes à coopérer avec des moyens de fixation conjugués équipant le dispositif d'absorption d'énergie 8.

Le dispositif d'absorption d'énergie 8 comporte une poutre 12 transversale d'absorption des chocs de haute énergie, solidaire des longerons 6 du châssis 2, une ossature 14 d'absorption des chocs de moyenne et faible énergie, fixée sur la poutre 12, et deux absorbeurs d'énergie 16, disposés entre une face avant 18 de la poutre 12 et l'ossature 14.

La poutre 12 est ici une plaque métallique s'étendant verticalement et transversalement, en appui par sa face arrière 20 sur les platines 10. En variante, la poutre 12 présente une section différente. La poutre présente par exemple une section droite ouverte, par exemple en U ou en alternative une section droite fermée, de sorte que la poutre étant tubulaire.

La poutre 12 est fixée aux platines 10, par exemple à l'aide de boulons de 22.

La poutre 12 lie transversalement les extrémités avant des longerons 6 et assure la cohésion du châssis du véhicule en cas de chocs à haute vitesse.

L'ossature 14 sert de support à une peau de pare-chocs (non représentée) et de moyen d'absorption des chocs de faible et de moyenne énergie, tels que des chocs « piéton » et des chocs « réparabilité ».

L'ossature 14 est allongée transversalement et s'étend le long de la poutre 12, en étant en appui suivant l'axe longitudinal X contre la face avant 18 de la poutre 12. Elle est fixée à la poutre 12, par exemple par des moyens de fixation encliquetables.

L'ossature 14 présente une paroi avant 24 et une paroi arrière 26, sensiblement verticale et espacées suivant l'axe longitudinal X et des nervures de renfort 28 verticales s'étendant entre les parois avant 26 et arrière 28 de l'ossature 14 et délimitant des caissons 30 à l'intérieur de l'ossature 14.

L'ossature 14 est de préférence réalisée en une matière plastique rigide.

L'ossature 14 présente sur sa paroi arrière 28, en regard de la face avant 18 de la poutre 12, des logements 32 de réception des éléments déformables d'absorption d'énergie 18. Chaque logement 32 est défini au droit d'un longeron 6 respectif.

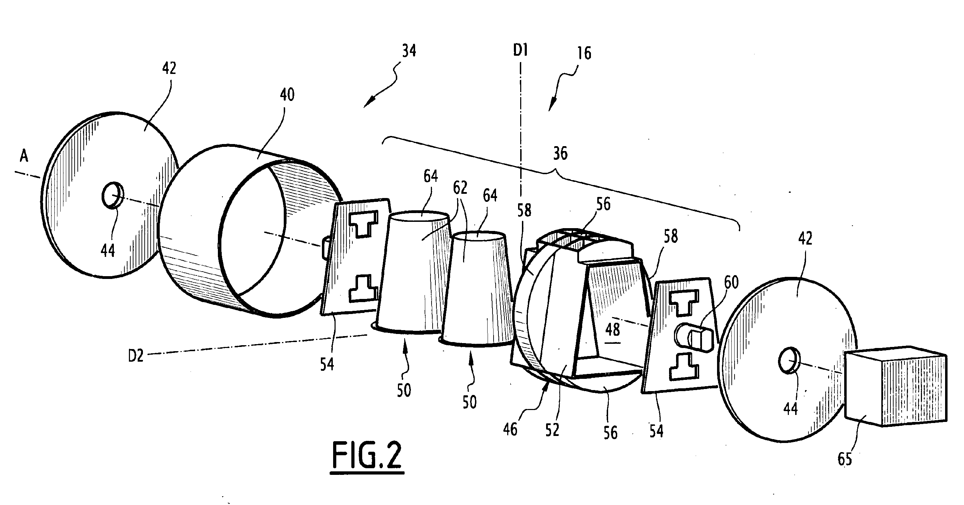

Tel qu'illustré sur la figure 2, chaque absorbeur d'énergie 16 s'étend suivant un axe principal A. Chaque absorbeur d'énergie 16 est apte à absorber une fraction de l'énergie d'un choc par compression de l'absorbeur d'énergie 16.

Chaque absorbeur d'énergie 16 comprend un boîtier 34 et un ensemble d'absorption d'énergie 36 à rigidité en compression différenciée suivant une première direction D1 et une deuxième direction D2, reçu à l'intérieur du boîtier 34 en étant rotatif autour de l'axe principal A de l'absorbeur d'énergie 16, de manière à aligner sélectivement la première direction D1 ou la deuxième direction D2 avec un axe de référence.

La première direction D1 et la deuxième direction D2 sont perpendiculaires entre elles. L'axe principal A est perpendiculaire à la première direction D1 et la deuxième direction D2

Le boîtier 34 comprend un manchon 40 tubulaire cylindrique de section circulaire d'axe l'axe principal A, délimitant une cavité de réception de l'ensemble d'absorption d'énergie 36, et deux couvercles 42 de fermeture des extrémités axiales du manchon 40. Chaque couvercle 42 comprend un orifice central 44 centré sur l'axe principal A.

L'ensemble d'absorption d'énergie 36 à rigidité différenciée présente une première rigidité en compression suivant une première direction D1 perpendiculaire à l'axe principal A et une deuxième rigidité en compression, différente de la première raideur, suivant une deuxième direction D2 perpendiculaire à l'axe principale A.

Il comprend une cage 46 délimitant un espace de réception 48, au moins un organe d'absorption d'énergie 50, ici deux organes d'absorption d'énergie 50 insérable dans l'espace de réception 48.

La cage 46 comprend un corps principal 52 tubulaire délimitant l'espace de réception 48 s'étendant suivant l'axe principal A, et deux capots 54 de fermeture des extrémités axiales du corps principal 52.

Le corps principal 52 est muni sur sa surface externe d'un jeu de nervures de renfort 56 aligné avec la première direction D1, ici de deux jeux de nervures de renforts 56 diamétralement opposés alignés suivant la première direction D1.

Le corps principal 52 est muni sur sa surface externe d'au moins une portée de guidage 58 pour le guidage de la cage 46 en rotation à l'intérieur du boîtier 34, ici de deux portées de guidage 58 cylindrique diamétralement opposée par rapport à l'axe A et alignées suivant la deuxième direction 62 . Chaque portée de guidage 58 est une portion de cylindre centré sur l'axe principal A.

Chaque capot 54 comprend une projection 60 de guidage en rotation et d'entraînement propre à faire saillie à l'extérieur du boîtier 34 au travers de l'orifice central 44 d'un capot 42 pour guider la cage en rotation autour de l'axe principal A et permettre l'entraînement en rotation de la cage 46 autour de l'axe principal A par rapport au boîtier 34.

Chaque organe d'absorption d'énergie 50 est creux de forme tubulaire s'étendant suivant la première direction D1 et rigide. Chaque organe d'absorption d'énergie 50 est propre à se déformer en dissipant de l'énergie lors d'une compression axial suivant la première direction D1, et lors d'une compression latérale suivant la deuxième direction D2.

Chaque organe d'absorption d'énergie 50 comprend une paroi latérale 62 tubulaire. Chaque organe d'absorption d'énergie 50 comprend sa paroi latérale 62 individuelle, propre à cet organe d'absorption d'énergie 50.

Chaque organe d'absorption d'énergie 50 est ici de forme conique et comprend une paroi latérale 62 de forme tronconique.

Chaque organe d'absorption d'énergie 50 est fermé à une extrémité axiale et comprend une paroi transversale 64 plane fermant l'extrémité de plus faible diamètre de sa paroi latérale 62.

Les organes d'absorption d'énergie 50 sont disposés à l'intérieur de la cage 46 de façon à s'étendre suivant la première direction D1.

L'espace de réception 48 s'étend au travers du corps principal 52 suivant l'axe principal A. Les deux organes d'absorption d'énergie 50 sont alignés l'un derrière l'autre suivant l'axe principal A.

L'absorbeur d'énergie 16 comprend des moyens d'entraînement en rotation de l'ensemble d'absorption d'énergie 36 autour de l'axe principal A. Ces moyens d'entraînement comprennent ici un moteur 65 fixé sur un couvercle 42 et en prise avec une projection 60 d'un capot 54.

L'espace de réception 48 présente une forme correspondant à celle de chaque organe d'absorption d'énergie 50 de telle manière à maintenir chaque élément d'absorption d'énergie 50 fixe dans la cage 46.

Tel que représenté sur la figure 2, l'espace de réception 48 présente une section droite trapézoïdale.

Lors de l'écrasement d'un absorbeur d'énergie 16, le boîtier 46 et l'ensemble d'absorption d'énergie 36 participent à la dissipation d'énergie. Du fait de sa configuration, la cage 46 présente une rigidité plus élevée suivant la première direction D1 que suivant la deuxième direction D2, perpendiculaire à la première direction D1. En outre, chaque organe d'absorption d'énergie 50 présente une rigidité en compression plus élevée dans la première direction D1, correspondant à sa direction d'extension, que dans la deuxième direction D2.

Ainsi, l'orientation de l'ensemble d'absorption d'énergie 36 de chaque absorbeur d'énergie 16 pour aligner sélectivement la première direction D1 ou la deuxième direction D2 avec une direction de référence, permet de modifier la rigidité en compression de l'absorbeur d'énergie suivant cette direction de référence.

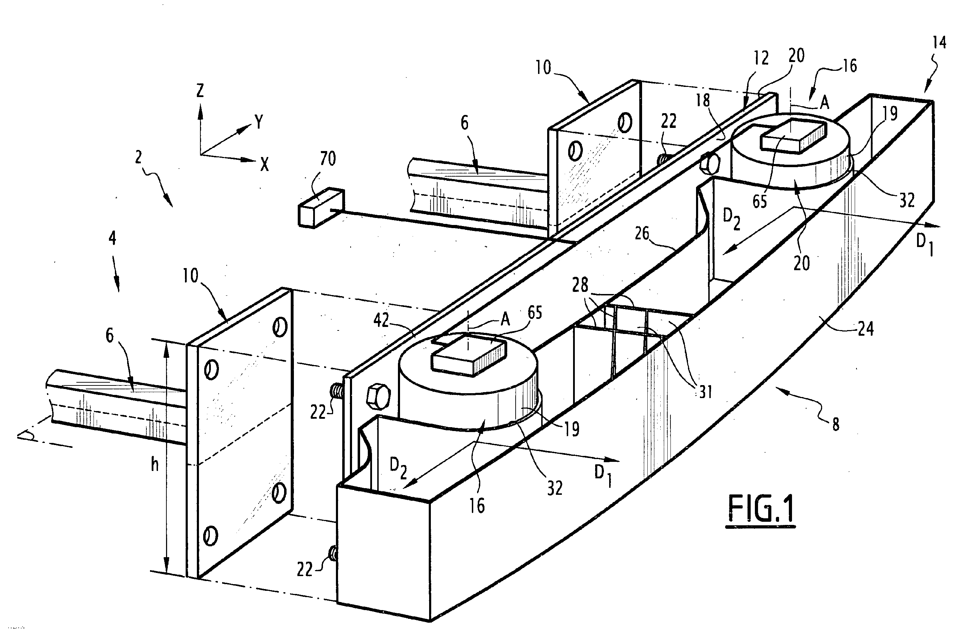

En référence aux figures 1 et 2, chaque absorbeur d'énergie 18 est logé dans un logement 32 de l'ossature 14 de manière à ce que son axe principal A est orienté verticalement.

Le dispositif d'absorption d'énergie 8 comporte un calculateur 70 embarqué à bord du véhicule pour commander les moteurs 65 des absorbeurs d'énergie 16. Le calculateur 70 est relié au moteur 65 de chaque absorbeur d'énergie 16. Le calculateur 70 est apte à déterminer l'imminence et la nature d'un choc, en fonction de paramètres dont les valeurs instantanées sont mesurées par différents capteurs reliés au calculateur 70. Le calculateur 70 élabore en réponse un signal électrique de commande des moteurs 65 pour orienter les ensembles d'absorption d'énergie 36 à rigidité différenciée des absorbeurs d'énergie 16.

Dans un mode de mise en oeuvre, l'orientation de l'ensemble d'absorption d'énergie de chaque absorbeur d'énergie 16 est asservie à la vitesse du véhicule, par exemple de manière à aligner la deuxième direction D2 avec l'axe longitudinal X pour les faibles vitesse et à aligner la première direction D1 avec l'axe longitudinal X pour les hautes vitesses.

En alternative ou en option, l'orientation de l'ensemble d'absorption d'énergie 36 de chaque absorbeur d'énergie 16 est commandée à partir de moyens de détection de choc. Par exemple, les ensembles d'absorption d'énergie 36 sont orientés de manière à aligner par défaut la première direction D1 avec l'axe longitudinal X pour les chocs autre que les « chocs piéton », et de manière à aligner la deuxième direction D2 avec l'axe longitudinal X en cas de détection d'un choc « piéton » imminent.

La rigidité en compression de l'ensemble d'absorption d'énergie 36 de chaque absorbeur d'énergie 16 suivant la première direction D1 et la deuxième direction D2 est adaptée facilement en configurant la cage 46 et chaque organe d'absorption d'énergie 50.

La rigidité en compression de la cage 46 suivant la direction D1 est augmentée par exemple en augmentant le nombre et/ou l'épaisseur des nervures d'un ou de chaque jeu de nervure alignés avec la première direction D1.

Chaque organe d'absorption d'énergie 50 se présente sous la forme d'un tube, de forme tronconique ou cylindrique s'étendant suivant la première direction D1, optionnellement fermé à une extrémité.

La rigidité en compression de chaque organe d'absorption d'énergie 50 est adaptée en modifiant par exemple la section droite de la paroi latérale, l'épaisseur de la paroi latérale, l'angle au sommet de la paroi latérale, en prévoyant des affaiblissements dans la paroi latérale, par exemple sous la forme de fentes ou de zones de moindre épaisseur, ou en fonction du matériau constituant l'organe d'absorption d'énergie 50.

La section droite de la paroi latérale de chaque organe d'absorption d'énergie est par exemple circulaire ou ellipsoïdale.

Chaque organe d'absorption d'énergie 50 est réalisé par exemple en matière plastique, en matériaux composite comprenant une matrice en matière plastique chargée de fibres ou en métal.

L'ensemble d'absorption d'énergie 36 est obtenu facilement et à faible coût. La cage 46 peut être obtenue par moulage de matière plastique. Chaque organe d'absorption d'énergie peut être obtenu par moulage de matière plastique ou en métal moulé, embouti ou extrudé. L'ensemble d'absorption d'énergie 36 de chaque absorbeur d'énergie présente un poids réduit et peut être orienté rapidement. Chaque absorbeur d'énergie peut se comprimer avec un résiduel incompressible faible.

L'espace de réception 48 de la cage 46 est adapté en conséquence, de façon à présenter une forme correspondant à celle du ou de chaque organe d'absorption d'énergie 50, de façon à maintenir le ou chaque organe d'absorption d'énergie 50 dans une orientation déterminée par rapport à la cage 46.

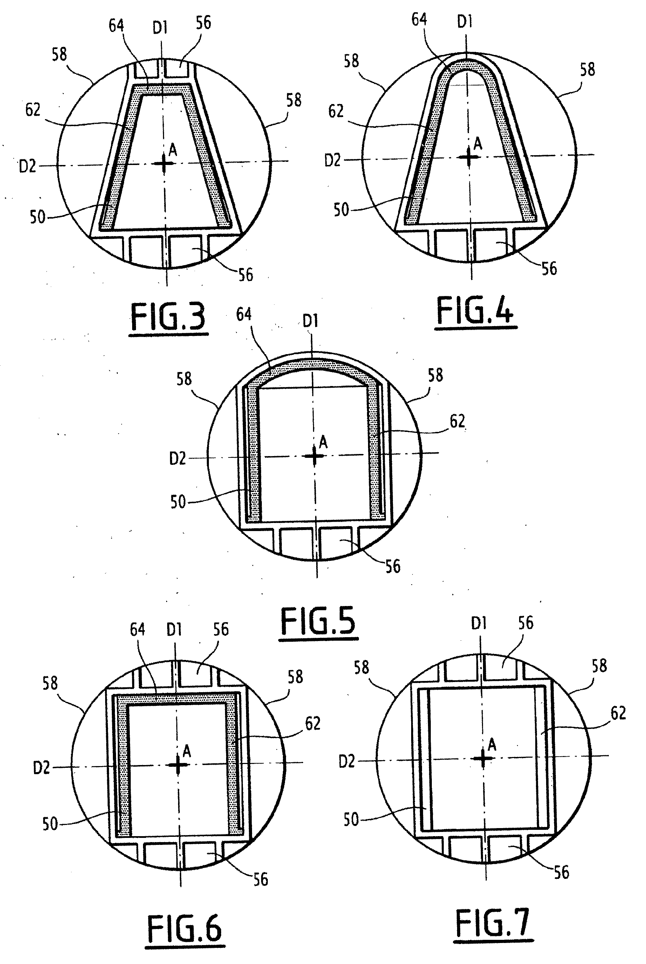

Les figures 3 à 8 sont des vues en coupe de variantes d'ensembles d'absorption d'énergie 36 .

La variante de la figure 3 correspond à celle de la figure 2. Dans la variante illustrée sur la figure 4, la paroi latérale 62 est tubulaire tronconique et la paroi transversale 64 est bombée vers l'extérieur. Dans la variante de la figure 5, la paroi latérale 62 est tubulaire cylindrique et la paroi transversale 64 est bombée vers l'extérieur. Dans la variante de la figure 6, la paroi latérale 62 est tubulaire cylindrique et la paroi transversale 64 est plane. Dans la variante de la figure 7, l'organe d'absorption d'énergie 50 est de forme cylindrique ouvert à ses deux extrémités.

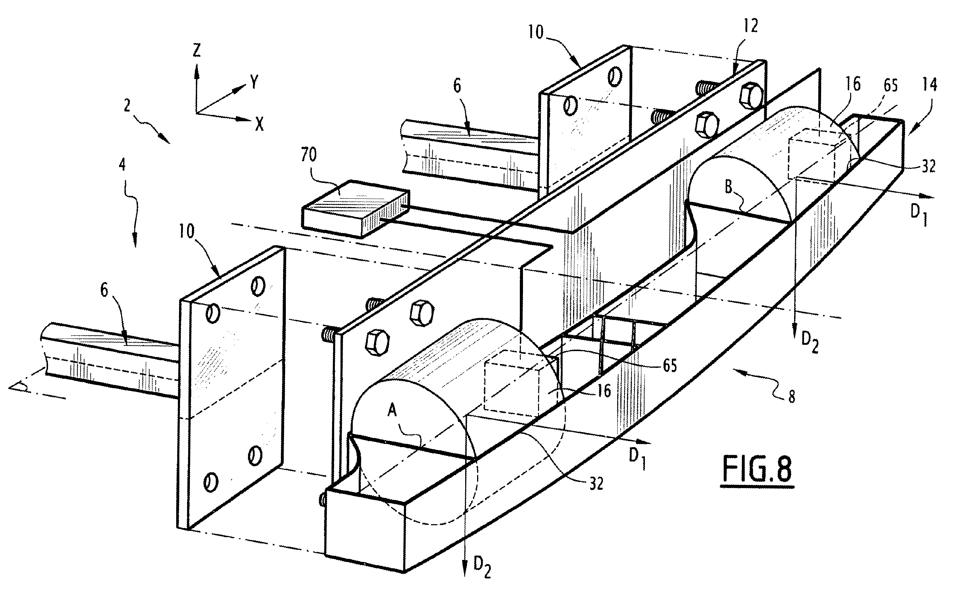

Le second mode de réalisation représenté sur la figure 8 diffère de celui de la figure 1 en ce que les absorbeurs d'énergie 16 sont disposés avec leur axe principal orienté horizontalement et transversalement.

Dans cette configuration également, la rotation de l'ensemble d'absorption d'énergie de chaque absorbeur d'énergie 16 permet de régler la rigidité en compression de l'absorbeur d'énergie 16 suivant l'axe longitudinal X.

## Revendications

1. Absorbeur d'énergie (16) du type comprenant des moyens d'absorption d'énergie (36) à rigidité en compression différenciée suivant une première direction (D1) et une deuxième direction (D2) orientables de façon à aligner sélectivement la première direction (D1) ou la deuxième direction (D2) avec un axe de référence (X), **caractérisé en ce qu'**il comprend un boîtier (34), les moyens d'absorption d'énergie (36) étant reçus à l'intérieur du boîtier (34) et comprenant au moins un organe d'absorption d'énergie (50) creux de forme tubulaire s'étendant suivant la première direction (D1), et une cage (46) de support du ou de chaque organe d'absorption d'énergie (50) montée rotative dans le boîtier (34).

2. Absorbeur d'énergie selon la revendication 1, dans lequel la cage (46) présente une rigidité en compression différente suivant la première direction (D1) et la deuxième direction (D2)

3. Absorbeur d'énergie selon la revendication 1 ou 2, dans lequel la cage (46) comprend sur sa surface externe au moins un jeu de nervures de renfort (60) aligné avec la première direction (D1), notamment deux jeux de nervures de renfort (60) diamétralement opposés alignés suivant la première direction (D1).

4. Absorbeur d'énergie selon l'une quelconque des revendications précédentes, dans lequel la cage (46) comprend sur sa surface externe au moins une portée de guidage (62) cylindrique pour le guidage en rotation de la cage (46) à l'intérieur du boîtier (34).

5. Absorbeur d'énergie selon l'une quelconque des revendications précédentes, dans lequel le ou chaque élément d'absorption d'énergie (16) comprenant des moyens (63) d'entraînement en rotation de la cage (46) à l'intérieur du boîtier, fixés sur le boîtier (34).

6. Absorbeur d'énergie selon l'une quelconque des revendications précédentes, dans lequel le ou chaque organe d'absorption d'énergie (50) est de forme conique ou cylindrique.

7. Absorbeur d'énergie selon l'une quelconque des revendications précédentes, dans lequel le ou chaque organe d'absorption d'énergie (50) est fermé à une extrémité.

8. Dispositif d'absorption d'énergie, comprenant une poutre (12) transversale d'absorption des chocs de haute énergie, destinée à s'étendre entre les extrémité de longerons d'un châssis de véhicule automobile, une ossature (14) d'absorption des chocs de faible énergie, fixée sur la poutre, et deux absorbeurs d'énergie (16) selon l'une quelconque des revendications précédentes, logés entre l'ossature et la poutre de manière à être situés au droit des longerons.

9. Dispositif d'absorption d'énergie selon la revendication 8, **caractérisé en ce que** ledit axe de référence s'étend suivant un axe longitudinal (X) ou un axe transversal (Y) du véhicule sur lequel est monté ledit dispositif d'absorption d'énergie (12).

10. Véhicule automobile comportant un châssis (2) ayant deux longerons (6) parallèles suivant un axe longitudinal (X), et un pare-chocs comportant un dispositif d'absorption d'énergie (12) selon la revendication 8 ou 9 monté sur lesdits longerons du châssis.

## Patentansprüche

1. Energieabsorber (16) des Typs aufweisend Energieabsorptionsmittel (36) von unterschiedlicher Kompressionssteifigkeit in einer ersten Richtung (D1) und einer zweiten Richtung (D2), die derart orientierbar sind, dass die erste Richtung (D1) oder die zweite Richtung (D2) zu einer Referenzachse (X) ausrichtbar ist, **dadurch gekennzeichnet, dass** er aufweist ein Gehäuse (34), die Energieabsorptionsmittel (36), die im Inneren des Gehäuses (34) aufgenommen sind und die aufweisen wenigstens ein hohles, rohrförmiges Energieabsorptionselement (50), das sich in die erste Richtung (D1) erstreckt, und einen Stützkäfig (46) für das oder für jedes Energieabsorptionselement (50), der in dem Gehäuse drehbar montiert ist.

2. Energieabsorber gemäß Anspruch 1, wobei der Käfig (46) eine Kompressionssteifigkeit hat, die entlang der ersten Richtung (D1) und der zweiten Richtung (D2) unterschiedlich ist.

3. Energieabsorber gemäß Anspruch 1 oder 2, wobei der Käfig (46) an seiner Außenfläche aufweist wenigstens einen Satz Verstärkungsrippen (60), die zu der ersten Richtung (D1) ausgerichtet sind, insbesondere zwei Sätze diametral entgegengesetzter Verstärkungsrippen (60), die entlang der ersten Richtung (D1) ausgerichtet sind.

4. Energieabsorber gemäß irgendeinem der vorhergehenden Ansprüche, wobei der Käfig (46) an seiner Außenfläche wenigstens einen zylindrischen Führungsabschnitt (62) aufweist zum Drehführen des Käfigs (46) im Inneren des Gehäuses (34).

5. Energieabsorber gemäß irgendeinem der vorhergehenden Ansprüche, wobei das oder jedes Energieabsorptionselement (16) Mittel (63) zum Drehantreiben des Käfigs (46) im Inneren des Gehäuses aufweist, die am Gehäuse (34) befestigt sind.

6. Energieabsorber gemäß irgendeinem der vorhergehenden Ansprüche, wobei das oder jedes Energieabsorptionselement (50) konusförmig oder zylinderförmig ist.

7. Energieabsorber gemäß irgendeinem der vorhergehenden Ansprüche, wobei das oder jedes Energieabsorptionselement (50) an einem Ende geschlossen ist.

8. Energieabsorptionsvorrichtung mit einem Querbalken (12) zur Absorption von Stößen hoher Energie, der vorgesehen ist, um sich zwischen den Enden von Längsträgern eines Chassis eines Kraftfahrzeugs zu erstrecken, eine Struktur (14) zur Absorption von Stößen schwacher Energie, die an dem Balken befestigt ist, und zwei Energieabsorber (16) gemäß irgendeinem der vorhergehenden Ansprüche, die zwischen der Struktur und dem Balken derart angeordnet sind, dass sie unmittelbar bei den Längsträgern angeordnet sind.

9. Energieabsorptionsvorrichtung gemäß Anspruch 8, **dadurch gekennzeichnet, dass** die Referenzachse sich entlang einer Längsachse (X) oder einer Querachse (Y) des Fahrzeugs erstreckt, auf welcher die Energieabsorptionsvorrichtung (12) angebracht ist.

10. Kraftfahrzeug mit einem Chassis (2), welches zwei 1Längsträger (6) hat, die entlang einer Längsachse (X) parallel sind, und einem Stoßfänger, welcher eine Energieabsorptionsvorrichtung (12) gemäß Anspruch 8 oder 9 an den Längsträgern des Chassis aufweist.

## Claims

1. Energy absorber (16) of the type comprising energy absorption means (36) with differentiated rigidity under compression in a first direction (D1) and a second direction (D2) both orientable so as to selectively align the first direction (D1) or the second direction (D2) with a reference axis (X), **characterised in that** it comprises a housing (34), the energy absorption means (36) being received inside the housing (34) and comprising at least one tubular-shaped hollow energy absorption member (50) extending in the first direction (D1), and a cage (46) supporting the or each energy absorption member (50) mounted so as to rotate in the housing (34).

2. Energy absorber according to claim 1, in which the cage (46) has a rigidity under compression different in the first direction (D1) and the second direction (D2).

3. Energy absorber according to claim 1 or 2, in which the cage (46) comprises on its external surface at least one set of reinforcing ribs (60) aligned with the first direction (D1), in particular two sets of diametrically opposed reinforcing ribs (60) aligned in the first direction (D1).

4. Energy absorber according to any one of the preceding claims, in which the cage (46) comprises on its external surface at least one cylindrical guide area (62) for the rotational guidance of the cage (46) inside the housing (34).

5. Energy absorber according to any one of the preceding claims, in which the or each energy absorption element (16) comprising means (63) for driving the cage (46) in rotation inside the housing, fixed to the housing (34).

6. Energy absorber according to any one of the preceding claims, in which the or each energy absorption member (50) is conical or cylindrical in shape.

7. Energy absorber according to any one of the preceding claims, in which the or each energy absorption member (60) is closed at one end.

8. Energy absorption device comprising a transverse beam (12) for absorbing high-energy impacts, intended to extend between the ends of the longitudinal members of a motor vehicle chassis, a framework (14) for absorbing low-energy impacts, fixed to the beam, and two energy absorbers (16) according to any one of the preceding claims, housed between the framework and the beam so as to be situated in line with the longitudinal members.

9. Energy absorption device according to claim 8, **characterised in that** said reference axis extends along a longitudinal axis (X) or a transverse axis (Y) of the vehicle on which said energy absorption device (12) is mounted.

10. Motor vehicle comprising a chassis (2) having two parallel longitudinal members (6) along a longitudinal axis (X), and a bumper comprising an energy absorption device (12) according to claim 8 or 9 mounted on said longitudinal members of the chassis.
